# EUROPÄISCHE PATENTSCHRIFT

(11) **EP 3 455 041 B1**
(45) Veröffentlichungstag und Bekanntmachung des Hinweises auf die Patenterteilung: **08.04.2020**
(21) Anmeldenummer: 17729364.4
(22) Anmeldetag: 11.05.2017
(51) Int. Cl.: B26D 7/18

(54) **HYBRIDSETZEINHEIT FÜR AUSBRECHSTIFTE UND/ODER AUSBRECHKRALLEN**
HYBRID SETTING UNIT FOR BREAKAWAY PINS OR BREAKAWAY CLAWS
UNITE HYBRIDE POUR L'EMPLACEMENT DE TIGES D'EJECTION

(30) Priorität: 13.05.2016 DE 102016108880
(43) Veröffentlichungstag der Anmeldung: 20.03.2019
(73) Patentinhaber: BOXPLAN GmbH & Co.KG, 78256 Steisslingen (DE)
(72) Erfinder: JAKOB, Joachim, 78315 Radolfzell (DE)
(74) Vertreter: Wagner, Sigrid
(86) Internationale Anmeldenummer: PCT/EP2017/061293
(87) Internationale Veröffentlichungsnummer: WO 2017/194659

(56) Entgegenhaltungen:
- DE-A1-102008 062 114
- DE-A1-102010 020 127

## Beschreibung

Die Erfindung betrifft eine Setzeinheit zur Herstellung eines Ausbrechwerkzeuges nach den Merkmalen des Oberbegriffs von Anspruch 1.

### STAND DER TECHNIK

Zum Stanzen und Ausbrechen werden als Ausbrechwerkzeuge meist Ausbrechplatten verwendet, in die Ausbrechstifte oder Ausbrechflachstreifen eingesetzt werden. Ein Beispiel für einen Ausbrechstift ist der Kronenstift (crown' pin) der Firma Boxplan. Der Ausbrechstift weist einen kreisförmigen Querschnitt auf.

Ausbrechflachstreifen weisen an ihrer Vorderseite eine Linie mit zwei Spitzen auf. Üblicherweise können Ausbrechflachstreifen aufgrund ihres geringen streifenförmigen Querschnitts nur manuell in eine Ausbrechplatte eingesetzt werden. Dazu wird in die Ausbrechplatte eine Öffnung eingebracht, die im Wesentlichen einem Querschnitt des Ausbrechflachstreifens entspricht. Meist werden diese Schlitze gelasert.

Das Einbringen der Ausbrechstifte ist grundsätzlich maschinell möglich, da diese relativ stabil sind. Dazu weisen solche Stifte an einem Ende, das in die Ausbrechplatte eingebracht wird, eine konische Verjüngung auf. Zusätzlich weisen diese Stifte an ihrer Oberseite meist eine Ausnehmung auf. Die Ausbrechstifte werden direkt mit dem Ende, an dem die chronische Verjüngung angeordnet ist, in das Material der Ausbrechplatte eingetrieben.

Nachteiligerweise müssen Ausbrechwerkzeuge, bei denen Ausbrechstifte und Ausbrechflachstreifen vorgesehen sind, sehr aufwändig hergestellt werden. In einem ersten sehr aufwendigen, aber bisher immer notwendigen Schritt werden die Schlitze oder Öffnungen für die Ausbrechflachstreifen vorgeschnitten. Dann werden die Ausbrechstifte manuell oder maschinell in die Ausbrechplatte eingetrieben. Anschließend werden die Ausbrechflachstreifen von Hand oder maschinell in die in einem zuvor nötigen Arbeitsgang geschaffenen Schlitze der Ausbrechplatte eingesetzt.

### OFFENBARUNG DER ERFINDUNG

### AUFGABE

Aufgabe der Erfindung ist es, eine Vorrichtung zum Herstellen eines Ausbrechwerkzeuges bereitzustellen, mit dem auf einfache Art und Weise Ausbrechstifte und Ausbrechflachstreifen in eine Ausbrechplatte eingesetzt werden können. Dabei sollen die Ausbrechstreifen bzw. Ausbrechkrallen in einem Arbeitsgang direkt in eine Ausbrechplatte eingesetzt werden können, ohne dass ein zuvor eingefräster oder gelaserter Schlitz in der Ausbrechplatte vorhanden sein muss.

### LÖSUNG DER AUFGABE

Zur Lösung der Aufgabe führen die Merkmale der Ansprüche 1, 2 und 3.

In typischen Ausführungsbeispielen umfasst eine Setzeinheit zum Herstellen eines Ausbrechwerkzeugs eine CAD-Software gestützte Steuereinheit, eine Aufnahme für eine Ausbrechplatte, eine Ausbrechstreifeneinbringung und eine Ausbrechstifteinbringung. Dadurch ergibt sich der Vorteil, dass auf einfache Art und Weise und in einem Arbeitsschritt Ausbrechstreifen mit einem streifenförmigen Querschnitt und Ausbrechstifte mit einem kreisförmigen Querschnitt in eine Ausbrechplatte eingebracht werden können, ohne die Ausbrechplatte dafür vorbereiten oder behandeln zu müssen.

Vorzugsweise weist der Ausbrechstift einen Querschnitt mit einem Durchmesser von 1 mm bis 4 mm auf. Dadurch lassen sich die besten Ausbrechergebnisse erzielen.

Bevorzugt weist eine Ausbrechstreifen, folgend wird dieser als Ausbrechkralle bezeichnet, einen rechteckigen Querschnitt auf. Bevorzugt weist der Querschnitt der Ausbrechkralle eine Dicke von 0,1 mm bis 3 mm auf. Bevorzugt weist der Querschnitt der Ausbrechkralle eine Länge von 2 mm bis 30 mm auf. Zweckmäßigerweise kann der Querschnitt der Ausbrechkralle einen Knick und oder einen oder mehrere Stege aufweisen.

In typischen Ausführungsbeispielen ist die Ausbrechkralleneinbringung geeignet, eine Ausbrechkralle in einen Ausbrechplatte einzubringen, ohne dass ein zuvor eingebrachter Einsetzschlitz, Einsetzstreifen oder eine andere Öffnung in das Ausbrechbrett eingebracht werden muss. Dadurch ergibt sich der Vorteil, dass die Ausbrechkralle direkt und ohne aufwendige Vorbereitung in ein Ausbrechbrett eingebracht werden kann. Dies bedeutet, dass die Ausbrechkrallen die Ausbrechplatte nicht vollständig durchdringen, sondern lediglich bis zu wenigen mm in die Oberfläche der Ausbrechplatte eindringen. Dies spart bisher notwendige und zeitintensive Arbeitsgänge ein.

In typischen Ausführungsbeispielen ist die Ausbrechkralleneinbringung geeignet, eine Ausbrechkralle mittels einer Krallensetzhülse aufzunehmen. Die Ausbrechkralle wird in die Krallensetzhülse über eine Zuführung aus einem Magazin oder einem anderen Vorrat einzeln geladen. Dadurch ergibt sich der Vorteil, dass die Ausbrechkralle automatisch aufgenommen wird.

Bisher notwendige Detektionseinrichtung, die die vorbereiteten Schlitze in der Ausbrechplatte erkennen und lokalisieren konnten sind nun überflüssig, da die Ausbrechkrallen nun direkt und ohne vorbereitete Schlitze in die Ausbrechplatte gesetzt werden können. Dadurch ergibt sich der Vorteil, dass diese Detektionseinrichtung sowie die Vorbereitung der Ausbrechplatte mit Schlitzen eingespart werden können. Auch ein manuelles einschlagen der Ausbrechkrallen, was bisher zum Teil noch notwendig war, wird dadurch unnötig.

In typischen Ausführungsbeispielen ist die Ausbrechstifteinbringung geeignet, einen Ausbrechstift in die Ausbrechplatte einzutreiben. Vorzugsweise wird der Ausbrechstift direkt in das Material bzw. in die Oberfläche der Ausbrechplatte eingetrieben Dies bedeutet, dass die Ausbrechstifte die Ausbrechplatte nicht vollständig durchdringen, sondern lediglich bis zu beispielsweise 2 mm in die Oberfläche der Ausbrechplatte eindringen. Bevorzugt besteht die Ausbrechplatte aus Holz. Es sind aber auch weitere Materialien denkbar und sollen von der vorliegenden Erfindung umfasst sein.

In typischen Ausführungsbeispielen ist die Ausbrechstifteinbringung geeignet, einen Ausbrechstift aus einem Magazin oder einen Vorrat über ein Stiftzuführungsrohr zugeführt zu bekommen. Die Zuführung über das Stiftzuführungsrohr erfolgt beispielsweise mittels Druckluft. Dadurch ergibt sich der Vorteil, dass der Ausbrechstift automatisiert aufgenommen wird.

In typischen Ausführungsbeispielen ist der Steuerungsrechner geeignet, die Setzeinheit so zu steuern, dass die Ausbrechstifte und die Ausbrechkrallen nach einem vorgegebenen Plan oder Muster aus dem Magazin oder einem Vorrat entnommen und in die Ausbrechplatte eingesetzt werden können.

In typischen Ausführungsbeispielen ist der Steuerungsrechner geeignet, die Setzeinheit so zu verfahren, dass die Ausbrechstifte und Ausbrechkrallen nach einem vorgegebenen Plan oder Muster gesetzt werden können.

In typischen Ausführungsbeispielen sind die Ausbrechstifteinbringung und die Ausbrechkralleneinbringung in einer Setzeinheit hybridisiert.

In typischen Ausführungsbeispielen werden die Ausbrechstifte und die Ausbrechkrallen direkt in das Material der Ausbrechplatte eingetrieben. Dadurch ergibt sich der Vorteil, dass der Arbeitsschritt: Ausnehmung für Ausbrechstifte und Ausbrechkrallen bzw. Ausbrechstreifen in eine Ausbrechplatte fräsen bzw. lasern, wie er vor dieser Erfindung notwendig war, entfällt. Bei den Ausbrechkrallen bzw. Ausbrechstiften ist nun möglich, diese direkt in eine Ausbrechplatte einzubringen.

In typischen Ausführungsbeispielen verfügt die Setzeinheit über unterschiedliche Arten von Magazinen oder Vorräten, die sich wiederum in entsprechende Durchmesser bzw. Längen unterteilen. Die Magazine oder die Vorräte der Ausbrechstifte sind so konstruiert, dass die Ausbrechstifte lose neben- und übereinander gestapelt liegen. Ein Modul am unteren Ende des Magazins oder des Vorrates entnimmt immer nur einen Stift. Dieser wird dann über ein Stiftzuführungsrohr in die Stiftsetzhülse geblasen und dann in die Ausbrechplatte eingesetzt. Für diese rückwärtige Zuführung klappt die Stiftsetzhülse für jeden Ladevorgang um ca. 90°, aus der vertikalen Einpressposition in eine horizontale Beladeposition um. Die Stiftsetzhülse der Ausbrechstifteinbringung kann ausgetauscht werden, so dass auch unterschiedliche Ausbrechstifte eingebracht werden können. Die Stiftsetzhülse verfügt über Stiftklemmschlitze, die ein Herausrutschen des Ausbrechstiftes durch Klemmung verhindern.

Bei den Magazinen oder den Vorräten der Ausbrechkrallen werden die Ausbrechkrallen sauber übereinander gestapelt gelagert und am unteren Ende einzeln entnommen. Eine Zuführung transportiert die einzelnen Ausbrechkrallen zur Krallensetzhülse, die diese Ausbrechkralle vom der Zuführung übernimmt. Dazu verfügt die Krallensetzhülse über Krallenklemmschlitze die ein selbsttätiges Entgleiten der Ausbrechkrallen nach der Aufnahme verhindern. Nach dem Ausrichten des Winkels über ein Drehmodul wird die Ausbrechkralle mittels eines ersten Krallenstößels oder eines zweiten Krallenstößels einer zweiten Stößeleinheit in eine Ausbrechplatte eingesetzt.

Das Einsetzen der Ausbrechstifte und Ausbrechkrallen erfolgt über sogenannte Stift- bzw. Krallenstößel, die durch die Stiftsetzhülse bzw. die Krallensetzhülse hindurchstossen und so die mittels Stiftklemmschlitzen bzw. Krallenklemmschlitzen fixierten Ausbrechstifte bzw. Ausbrechkrallen in die Ausbrechplatte treiben.

Dazu sind in typischen Ausführungsbeispielen eine erste Stößeleinheit und eine zweite Stößeleinheit vorgesehen. Die erste Stößeleinheit umfasst einen ersten Stiftstößel und einen zweiten Stiftstößel. Die zweite Stößeleinheit umfasst einen ersten Krallenstößel und einen zweiten Krallenstößel. Die erste Stößeleinheit ist für das Einpressen der Ausbrechstifte vorgesehen. Die zweite Stößeleinheit ist für das Einpressen der Ausbrechkrallen vorgesehen.

Der erste und zweite Stiftstößel sowie der erste und zweite Krallenstößel werden mittels einer dynamischen, zwischen einer Kopfplatte und der Grundplatte verfahrbaren Druckplatte aktiviert. Mittels eines Schwenkmoduls wird dabei bestimmt, ob die erste Stößeleinheit oder die zweite Stößeleinheit aktiviert wird. Das Schwenkmodul ist an der Druckplatte derart angeordnet, dass ein mittlerer Durchlass, von einerseits drei Durchlässen der Druckplatte, oder ein gegenüberliegender anderer mittlerer Durchlass, von andererseits drei Durchlässen der Druckplatte, verschlossen werden kann.

Verfährt die Druckplatte in Richtung der Grundplatte, durchgreifen drei der Stößel, beispielsweise der zweite Stiftstößel, der erste Krallenstößel und der zweite Krallenstößel, die Druckplatte und bleiben dadurch inaktiv. Ein Stößel, beispielsweise der erste Stiftstößel wird dann in Folge des durch das Schwenkmodul verschlossenen mittleren Durchlasses aktiviert.

Der Stift- bzw. Krallenstößel der ersten oder der zweiten Stößeleinheit, welcher jeweils zum mittleren der drei Durchlässe der Druckplatte angeordnet ist, befindet sich in der Aktivposition. Mittels der ersten bzw. zweiten Stößeleinheit kann einer der jeweils beiden Stift- bzw. Krallenstößel in diese Aktivposition bewegt werden.

Die Setzeinheit arbeitet Schritt für Schritt die Anweisungen, welcher Ausbrechstift und welche Ausbrechkralle in welchem Winkel, an welche Position zu setzen ist, aus dem CAD ab.

In einem bevorzugten Ausführungsbeispiel wird der Vorgang des Einpressens der Ausbrechstifte bzw. der Ausbrechkrallen nur mit einem Antrieb und einer Druckplatte vorgenommen. Dabei ist das Schwenkmodul notwendig, welches durch verschliessen des mittleren Durchlasses oder des anderen mittleren Durchlasses der Druckplatte die erste oder die zweite Stößeleinheit aktiviert.

Eine weitere Ausführungsform stellt sich derart dar, dass die Druckplatte zwischen der ersten Stößeleinheit und der zweiten Stößeleinheit geteilt ist. Dabei bewegt ein Antrieb mittels einer Kupplung immer nur eine Druckplattenhälfte, wodurch entweder die erste Stößeleinheit oder die zweite Stößeleinheit aktiviert wird.

Darüber hinaus ist auch denkbar, dass bei der geteilten Druckplatte beide Druckplattenhälften mit einem separaten Antrieb bewegt werden.

In den letzten beiden Ausführungsbeispielen mit einer geteilten Druckplatte entfällt daher die mittels Schwenkmodul erfolgende Aktivierung bzw. Umschaltung auf entweder die erste Stößeleinheit oder die zweite Stößeleinheit.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 eine perspektivische Ansicht eines erfindungsgemäßen Ausführungsbeispiels einer Setzeinheit mit einer Ausbrechstifteinbringung und einer Ausbrechkralleneinbringung,
Figur 2 eine perspektivische Ansicht eines Ausführungsbeispiels einer ersten Stößeleinheit für Ausbrechstifte ,
Figur 3 eine perspektivische Ansicht eines Ausführungsbeispiels einer zweiten Stößeleinheit für Ausbrechkrallen.

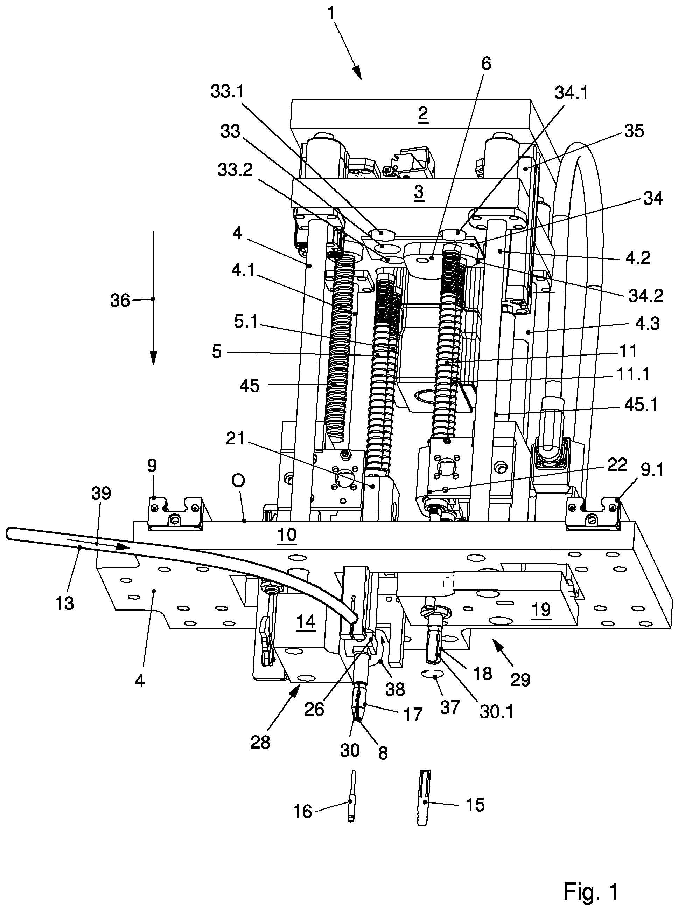

In Figur 1 ist eine Setzeinheit 1 dargestellt. In dem dargestellten Ausführungsbeispiel umfasst die Setzeinheit 1 eine Grundplatte 10, eine Ausbrechstifteinbringung 28 und eine Ausbrechkralleneinbringung 29, wobei die Ausbrechstifteinbringung 28 eine erste Stößeleinheit 21 und die Ausbrechkralleneinbringung 29 eine zweite Stößeleinheit 22 aufweist.

An der Unterseite U der Grundplatte 10 sind die Ausbrechstifteinbringung 28 und die Ausbrechkralleneinbringung 29 angeordnet. Die Unterseite U ist die einem nicht näher gezeigten Ausbrechwerkzeug zugewandte Seite. Die Ausbrechstifteinbringung 28 verfügt über ein Klappmodul 14, ein beispielsweise mit Druckluft betriebenes Stiftzuführungsrohr 13 und eine Stiftsetzhülse 17 mit Stiftklemmschlitzen 30. Über das Stiftzuführungsrohr 13 werden Ausbrechstifte 16 in Pfeilrichtung 39 der Stiftsetzhülse 17 der Ausbrechstifteinbringung 28 zugeführt.

Zum Beladen der Stiftsetzhülse 17 über das Stiftzuführungsrohr 13 wird die Stiftsetzhülse 17 durch das Klappmodul 14 aus einer parallel zu einem nicht näher gezeigten Ausbrechwerkzeug Beladeposition in eine zu dem Ausbrechwerkzeug hin ausgerichtete Einpressposition geklappt. Die Klapprichtung der Stiftsetzhülse 17 wird durch den Pfeil 38 verdeutlicht. In Figur 1 ist die zu dem Ausbrechwerkzeug hin ausgerichtete Einpressposition der Stiftsetzhülse 17 dargestellt.

Wurde der Ausbrechstift 16 in der Beladeposition geladen, klappt das Klappmodul 14 die Stiftsetzhülse 17 in die Einpressposition zurück. Danach kann der geladene Ausbrechstift 16 direkt mittels eines ersten Stiftstößels 5 oder eines zweiten Stiftstößels 5.1 einer ersten Stößeleinheit 21 in ein nicht näher gezeigtes Ausbrechwerkzeug eingebracht werden.

Die Stiftsetzhülse 17 ist hülsenförmig ausgeformt und weist ein Klemmmaul 8 auf, wobei das Klemmmaul 8 mindestens zwei zueinander beabstandbare Maulteile zum Halten des Ausbrechstifts 16 umfasst und entsprechende Stiftklemmschlitze 30 aufweist.

Die Ausbrechkralleneinbringung 29 verfügt über ein Drehmodul 19 und eine Krallensetzhülse 18. Von einem nicht dargestellten Ausbrechkrallenmagazin oder einem Ausbrechkrallenvorrat führt eine nicht näher gezeigte bewegliche Zuführung zu der Krallensetzhülse 18 der Ausbrechkralleneinbringung 29, um diese mit einer Ausbrechkralle 15 zu beladen. Die Krallensetzhülse 18 ist um 360° drehbeweglich angeordnet. Die Drehbewegung wird durch das Drehmodul 19 durchgeführt und durch den Pfeil 37 verdeutlicht.

Die Krallensetzhülse 18 ist ebenfalls hülsenförmig ausgeformt und verfügt über einen oder mehrere Krallenklemmschlitze 30.1, über welche die Ausbrechkralle 15 von der beweglichen Zuführung aufgenommen wird.

Mit der Ausbrechstifteinbringung 28 steht die erste Stößeleinheit 21 in Wirkverbindung. Über diese erste Stößeleinheit 21 und den dort integrierten ersten Stiftstößel 5 und zweiten Stiftstößel 5.1 werden die Ausbrechstifte 16 durch die Stiftsetzhülse 17 in das Ausbrechwerkzeug eingebracht.

Mit der Ausbrechkralleneibringung 29 steht eine zweite Stößeleinheit 22 in Wirkverbindung. Über diese zweite Stößeleinheit 22 und die dort integrierten ersten Krallenstößel 11 und zweiten Krallenstößel 11.1 werden die Ausbrechkrallen 15 durch die Krallenhülse 18 in das nicht näher gezeigte Ausbrechwerkzeug eingepresst.

An der Oberseite O der Grundplatte 10 der Setzeinheit 1 ist eine erste Führungsschienen 9 und eine zweite Führungsschiene 9.1 angeordnet. Die Oberseite O ist die der beiden Stößeleinheiten 21 und 22 zugewandte Seite. Die Führungsschienen 9 bzw. 9.1 sind derart an der Grundplatte 10 angeordnet, dass zwischen ihnen die beiden Stößeleinheiten 21 bzw. 22 angebracht sind.

Weiterhin befindet sich zwischen der Grundplatte 10 und einer Kopfplatte 2 eine Druckplatte 3. Die Grundplatte 10, die Druckplatte 3 und die Kopfplatte 2 sind über eine erste Führungswelle 4, eine zweite Führungswelle 4.1, eine dritte Führungswelle 4.2 und eine vierte Führungswelle 4.3 miteinander verbunden.

Die erste Führungswelle 4, die zweite Führungswelle 4.1, die dritte Führungswelle 4.2 und die vierte Führungswelle 4.3 durchgreifen die Druckplatte 3 an ihren jeweiligen Eckenbereichen. Dadurch kann die Druckplatte 3 zwischen der Grundplatte 10 und der Kopfplatte 2 verfahren werden. Die Verfahrbarkeit der Druckplatte 3 zwischen der Kopfplatte 2 und der Grundplatte 10 wird durch einen Antrieb 35 gewährleistet. Zwischen der Grundplatte 10 und der beweglichen Druckplatte 3 sind die erste Stößeleinheit 21 und die zweite Stößeleinheit 22 angeordnet. Die zwischen der Grundplatte 10 und der Kopfplatte 2 beweglich angeordnete Druckplatte 3 verfügt über sechs Durchlässe; einerseits über einen mittleren Durchlass 33, einen ersten Durchlass 33.1, und einen dritten Durchlass 33.2 und andererseits über einen weiteren mittleren Durchlass 34, einen vierten Durchlass 34.1 und einen sechsten Durchlass 34.2.

Weiterhin ist ein Schwenkmodul 6 an der zur Grundplatte 10 gewandten Seite der beweglichen Druckplatte 3 an zentraler Position angeordnet. Das Schwenkmodul 6 kann derart über einen nicht näher gezeigten Steuerungsrechner ausgerichtet werden, dass entweder der mittlere Durchlass 33 der Druckplatte 3 oder der mittlere Durchlass 34 der Druckplatte 3 verschlossen wird, so dass entweder der Stiftstößel 5.1 der ersten Stößeleinheit 21 oder der Krallenstößel 11.1 der zweiten Stößeleinheit 22 aktiviert werden.

In Figur 1 ist die Situation dargestellt, bei der das Schwenkmodul 6 den mittleren Durchlass 34 verschließt und damit den Krallenstößel 11.1 aktiviert. Der mittlere Durchlass 33 hingegen ist unverschlossen und daher für den Stiftstößel 5.1 durchlässig. Gleichzeitig sind der erste Durchlass 33.1 sowie der vierte Durchlass 34.1 ebenfalls unverschlossen und damit für den Stiftstößel 5 bzw. den Krallenstößel 11 durchlässig.

Der erste Durchlass 33.1, der dritte Durchlass 33.2, der vierte Durchlass 34.1 und der sechste Durchlass 34.2 gewährleisten also, dass die Stift- bzw. Krallenstößel, die nicht dem mittleren Durchlass 33 oder dem mittleren Durchlass 34 zugeordnet sind, inaktiv bleiben und durch die Druckplatte 3 durchgreifen können.

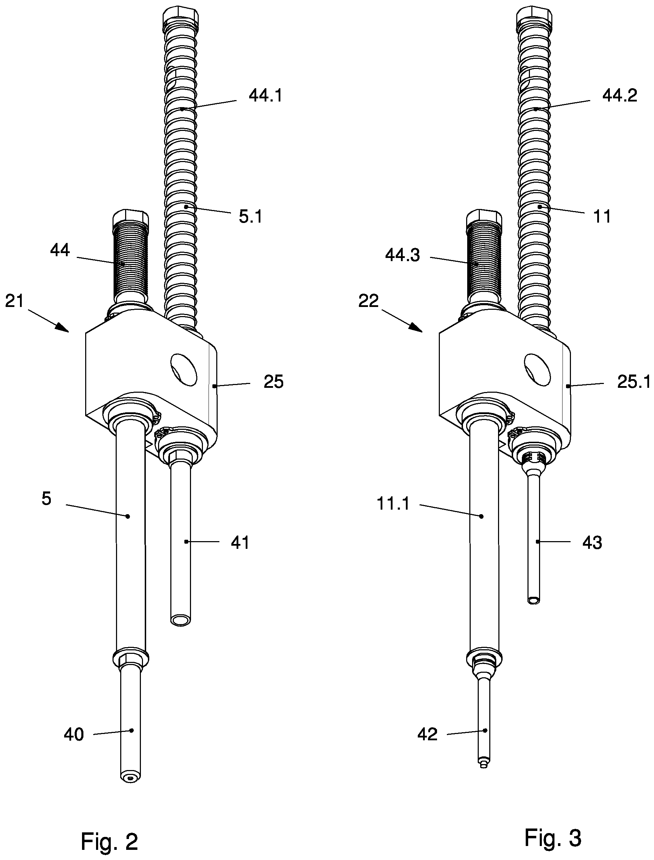

In Figur 2 ist die erste Stößeleinheit 21 dargestellte. Diese umfasst einen Stößelhalter 25 zur Führung des ersten Stiftstößels 5 und des zweiten Stiftstößels 5.1. Der erste Stiftstößel 5 und der zweite Stiftstößel 5.1 durchgreifen beide beweglich den Stößelhalter 25. Sie unterscheiden sich auf der dem Ausbrechwerkzeug zugewandten Seite des Stößelhalters 25 lediglich durch einen variierenden Stiftstößelkopf. Der erste Stiftstößel 5 weist einen Stiftstößelkopf 40 auf, der vor allem für stärkere Ausbrechstifte 16 geeignet ist. Der zweite Stiftstößel 5.1 weist einen Stiftstößelkopf 41 auf, der vor allem für mittlere bis schwächere Ausbrechstifte 16 geeignet ist. Der erste Stiftstößelkopf 40 und der zweite Stiftstößelkopf 41 können ja nach Bedarf ausgetauscht werden.

Auf der dem Ausbrechwerkzeug abgewandten Seite des Stößelhalters 25 sind der erste Stiftstößel 5 und der zweite Stiftstößel 5.1 identisch aufgebaut. Den ersten Stiftstößel 5 umfasst eine umliegende Stiftstößelfeder 44, den zweiten Stiftstößel 5.1 umfasst eine umliegende zweite Stiftstößelfeder 44.1. Die erste Stiftstößelfeder 44 und die zweite Stiftstößelfeder 44.1 bewirken, dass der erste Stiftstößel 5 bzw. der zweite Stiftstößel 5.1 nach einem Einpressvorgang jeweils wieder in ihre Ausgangsposition zurückfahren.

In Figur 2 ist die Situation dargestellt, in der der erste Stiftstößel 5 durch die - in Figur 2 nicht gezeigt - Druckplatte 3 bzw. das damit verbundene Schwenkmodul 6 niedergepresst wird, so dass der Ausbrechstift 16 durch den ersten Stiftstößelkopf 40 aus der Stiftsetzhülse 17 in das Ausbrechwerkzeug gepresst wird. Der Ausbrechstift 16 und die Stiftsetzhülse 17 sind nicht dargestellt.

In Figur 3 ist die zweite Stößeleinheit 22 dargestellte. Diese umfasst einen Stößelhalter 25.1 zur Führung des ersten Krallenstößels 11 und des zweiten Krallenstößels 11.1. Der erste Krallenstößel 11 und der zweite Krallenstößel 11.1 durchgreifen beide beweglich den Stößelhalter 25.1. Sie unterscheiden sich auf der dem Ausbrechwerkzeug zugewandten Seite des Stößelhalters 25.1 lediglich durch einen variierenden Krallenstößelkopf. Der erste Krallenstößel 11 weist einen Krallenstößelkopf 42 auf. Der zweite Krallenstößel 11.1 weist einen Krallenstößelkopf 43 auf. Die Krallenstößelköpfe 42 bzw. 43 sind für unterschiedlich ausgeformte Ausbrechkrallen 15 ausgebildet. Alle weiteren dargestellten Elemente wurden bereits in der Figur 2 beschrieben und sind mit den Elementen der ersten Stößeleinheit 21 identisch.

Die Funktionsweise der vorliegenden Erfindung ist wie folgt:

Zu Beginn eines Arbeitsganges befindet sich die Stiftsetzhülse 17 in der Beladeposition und wird nun über die mit Druckluft betriebene Stiftzuführungsröhre 13 mit einem Ausbrechstift 16 aus einem nicht näher gezeigten Vorrat geladen.

Wurde der Ausbrechstift 16 in der Beladeposition geladen, klappt das Klappmodul 14 die Stiftsetzhülse 17 in die Einpressposition. Gleichzeit kann die Krallensetzhülse 18 mit einer Ausbrechkralle 15 über eine bewegliche Zuführung aus der Magazin oder dem anderen Vorrat geladen werden.

Danach wird die Krallensetzhülse 18 und die dort gehaltene Ausbrechkralle 15 über das Drehmodul 19 ausgerichtet. Das Drehmodul 19 ist in der Lage, die Krallensetzhülse 18 mit der gehaltenen Ausbrechkralle 15 um 360° zu drehen, damit jede gewünschte Position der Ausbrechkralle 15 in Bezug auf das Ausbrechwerkzeug eingenommen werden kann.

Danach oder zeitgleich wird durch die Ausrichtung des Schwenkmoduls 6 bestimmt, ob die erste Stößeleinheit 21 oder die zweite Stößeleinheit 22 aktiviert wird, indem entweder der mittlere Durchlass 33 oder der mittlere Durchlass 34 der Druckplatte 3 durch das Schwenkmodul 6 verschlossen wird.

Es kann in einem weiteren nicht gezeigten Ausführungsbeispiel kann das Schwenkmodul 6 auch beide mittlere Durchlässe 33 und 34 verschließen. Damit kann bestimmt werden, dass die erste Stößeleinheit 21 und die zweite Stößeleinheit 22 aktiviert werden.

Anschließend oder zeitgleich wird die Setzeinheit 1 unter Berücksichtigung der Befehle des Steuerungsrechners an eine bestimmte Position über dem herzustellenden Ausbrechwerkzeug verfahren. Nach Erreichen der gewünschten Position wird die Druckplatte 3 durch den Antrieb 35 in Richtung eines Pfeils 36, siehe Figur 1, zwischen der Kopfplatte 2 und der Grundplatte 10 verfahren. Dadurch wird entweder der erste Stiftstößel 5 oder der zweite Stiftstößel 5.1 der ersten Stößeleinheit 21 oder der erste Krallenstößel 11 oder der zweite Krallenstößel 11.1 der zweiten Stößeleinheit 22 aktiviert. Dies wird durch das Schwenkmodul 6 geregelt, welches entweder den mittleren Durchlass 33 verschließt und damit die erste Stößeleinheit 21 aktiviert, oder den anderen mittleren Durchlass 34 verschließt und damit die zweite Stößeleinheit 22 aktiviert.

Dabei greift entweder der erste Stiftstößel 5 oder der zweite Stiftstößel 5.1 der ersten Stößeleinheit 21 in die Stiftsetzhülse 17 und presst den dort geklemmt gehaltenen Ausbrechstift 16 aus dem Klemmmaul 8 hinaus in das Ausbrechwerkzeug.

Die zweite Stößeleinheit 22 wird im Wesentlichen gleich verfahren und presst entweder mittels erstem Krallenstößel 11 oder zweitem Krallenstößel 11.1 die Ausbrechkrall 15 ebenfalls in das Ausbrechwerkzeug.

Die erste Stiftstößelfeder 44, die zweite Stiftstößelfeder 44.1 sowie die erste Krallenstößelfeder 44.2 und die zweite Krallenstößelfeder 44.3 ermöglichen, dass der erste Stiftstößel 5 bzw. der zweite Stiftstößel 5.1 sowie der erste Krallenstößel 11 bzw. der zweite Krallenstößel 11.1 wieder aus der Stiftsetzhülse 17 bzw. der Krallensetzhülse 18 herausgezogen werden. Dies kann auch durch einen Antrieb unterstützt werden.

Weiterhin fährt auch die Druckplatte 3 wieder in die Ausgangsposition in Richtung der Kopfplatte 2 zurück. Dabei kommen neben dem Antrieb 35 unterstützend eine erste Druckplattenrückstossfederungen 45 und eine zweite Druckplattenrückstossfederung 45.1 zum Einsatz. Die erste Druckplattenrückstossfederung 45 ist zwischen der ersten Führungswelle 4 und der zweiten Führungswelle 4.1 an der zur Grundplatte 10 hin ausgerichteten Seite der Druckplatte 3 angeordnet. Die zweite Druckplattenrückstossfederung 45.1 ist zwischen der dritten Führungswelle 4.2 und der vierten Führungswelle 4.3 an der zur Grundplatte 10 hin ausgerichteten Seite der Druckplatte 3 angeordnet.

Anschliessend beginnt ein neuer Arbeitsgang.

**Bezugszeichenliste**

| | | | |
|---|---|---|---|
| 1 | Setzeinheit | 33.1 | erster Durchlass |
| 2 | Kopfplatte | 33.2 | dritter Durchlass |
| 3 | Druckplatte | 34 | mittlere Durchlass |
| 4 | erste Führungswelle | 34.1 | vierter Durchlass |
| 4.1 | zweite Führungswelle | 34.2 | sechster Durchlass |
| 4.2 | dritte Führungswelle | 35 | Antrieb |
| 4.3 | vierte Führungswelle | 36 | Bewegungsrichtung Druckplatte |
| 5 | erster Stiftstößel | 37 | Drehbewegung Krallensetzhülse |
| 5.1 | zweiter Stiftstößel | 38 | Klapprichtung Stiftsetzhülse |
| 6 | Schwenkmodul | 39 | Transportrichtung Ausbrechstift |
| 8 | Klemmmaul | 40 | erster Stiftstößel kopf |
| 9 | erste Führungsschiene | 41 | zweiter Stiftstößelkopf |
| 9.1 | zweite Führungsschiene | 42 | erster Krallenstößelkopf |
| 10 | Grundplatte | 43 | zweiter Krallenstößelkopf |
| 11 | erster Krallenstößel | 44 | erste Stiftstößelfeder |
| 11.1 | zweiter Krallenstößel | 44.1 | zweite Stiftstößelfeder |
| 13 | Stiftzuführungsrohr | 44.2 | erste Krallenstößelfeder |
| 14 | Klappmodul | 44.3 | zweite Krallenstößelfeder |
| 15 | Ausbrechkralle | 45 | erste Druckplattenrückstossfederung |
| 16 | Ausbrechstift | 45.1 | zweite Druckplattenrückstossfederung |
| 17 | Stiftsetzhülse | U | Unterseite Grundplatte |
| 18 | Krallensetzhülse | O | Oberseite Grundplatte |
| 19 | Drehmodul | 56 | |
| 21 | erste Stößeleinheit | 57 | |
| 22 | zweite Stößeleinheit | 58 | |
| 25 | erster Stößelhalter | 59 | |
| 25.1 | zweiter Stößelhalter | 60 | |
| 26 | | 61 | |
| 28 | Ausbrechstifteinbringung | 62 | |
| 29 | Ausbrechkralleneinbringung | 63 | |
| 30 | Stiftklemmschlitz | 64 | |
| 30.1 | Krallenklemmschlitz | 65 | |
| 33 | mittlerer Durchlass | 66 | |

## Patentansprüche

1. Setzeinheit zur Herstellung eines Ausbrechwerkzeugs mit Ausbrechstiften (16) und/oder Ausbrechkrallen (15) mit einer Grundplatte (10), welche eine Ausbrechstifteinbringung (28) und eine Ausbrechkralleneinbringung (29) umfasst, wobei die Ausbrechstifteinbringung (28) mit einer ersten Stößeleinheit (21) und die Ausbrechkralleneinrichtung (29) mit einer zweiten Stößeleinheit (22) zusammenwirkt,
**dadurch gekennzeichnet, dass**
dass zwischen der Grundplatte (10) und einer Kopfplatte (2) eine Druckplatte (3) angeordnet ist, wobei die Druckplatte (3) zwischen der Grundplatte (10) und der Kopfplatte (2) bewegbar ist und mindestens vier Durchlässe (33, 33.1, 33.2, 34, 34.1, 34.2) aufweist, wobei mindestens einer der Durchlässe (33, 34) mittels eines Schwenkmoduls (6) verschließbar ist und dabei die erste Stößeleinheit (21) und/oder die zweite Stößeleinheit (22) aktivierbar ist.

2. Setzeinheit nach Anspruch 1, **dadurch gekennzeichnet, dass** die Ausbrechstifteinbringung (28) ein Klappmodul (14) und ein Stiftzuführungsrohr (13) sowie eine Stiftsetzhülse (17) mit Stiftklemmschlitzen (30) aufweist.

3. Setzeinheit nach Anspruch 1 oder 2, **dadurch gekennzeichnet, dass** die Ausbrechkralleneinbringung (29) ein Drehmodul (19) und eine Krallensetzhülse (18) mit einem Krallenklemmschlitz (30.1) aufweist.

4. Setzeinheit nach Anspruch 3, **dadurch gekennzeichnet, dass** die Krallensetzhülse (18) um 360° drehbeweglich angeordnet ist, wobei eine Drehbewegung durch das Drehmodul (19) durchführbar ist.

5. Setzeinheit nach einem der vorigen Ansprüche, **dadurch gekennzeichnet, dass** die erste Stößeleinheit (21) einen Stößelhalter (25) zur Führung eines ersten Stiftstößels (5) und eines zweiten Stiftstößels (5.1) aufweist, wobei der erste Stiftstößel (5) und der zweite Stiftstößel (5.1) beide beweglich den Stößelhalter (25) durchgreifen und jeweils eine umliegende Stiftstößelfeder (44, 44.1) umfassen, wobei sich der erste Stiftstößel (5) und der zweite Stiftstößel (5.1) durch einen variierenden Stiftstößelkopf (40, 41) unterscheiden.

6. Setzeinheit nach einem der vorigen Ansprüche, **dadurch gekennzeichnet, dass** die zweite Stößeleinheit (22) einen Stößelhalter (25.1) zur Führung des ersten Krallenstößels (11) und des zweiten Krallenstößels (11.1) aufweist, wobei der erste Krallenstößel (11) und der zweite Krallenstößel (11.1) beide beweglich den Stößelhalter (25.1) durchgreifen und jeweils eine umliegende Krallenstößelfeder (44.2, 44.3) umfassen, wobei sich der erste Krallenstößel (11) und der zweite Krallenstößel (11.1) durch einen variierenden Krallenstößelkopf (42, 43) unterscheiden.

7. Setzeinheit nach einem der vorigen Ansprüche, **dadurch gekennzeichnet, dass** die Grundplatte (10), die Kopfplatte (2) und die Druckplatte (3) über eine erste Führungswelle (4), eine zweite Führungswelle (4.1), eine dritte Führungswelle (4.2) und eine vierte Führungswelle (4.3) miteinander verbunden sind.

8. Verfahren zum Betreiben einer Setzeinheit (1) nach den Ansprüchen bis 7, **dadurch gekennzeichnet** durch folgende Schritte:
- Laden der Stiftsetzhülse (17) und/oder der Krallensetzhülse (18);
- Betätigung des Schwenkmoduls (6) zum Schließen mindestens eines der Durchlässe (33, 34);
- Bewegen der Druckplatte (3) in Richtung der Grundplatte (10);
- Einfahren des Stiftstößel (5, 5.1) und/oder des Krallenstößels (11, 11.1) in die Stiftsetzhülse (17) bzw. die Krallensetzhülse (18), geeignet, um den Ausbrechstift (16) und/oder die Ausbrechkralle (15) aus der Stiftsetzhülse (17) bzw. der Krallensetzhülse (18) zu drücken.

## Claims

1. Setting unit for producing a breakaway tool with breakaway pins (16) and/or breakaway claws (15) with a base plate (10) which includes a breakaway pin insertion device (28) and a breakaway claw insertion device (29), wherein the breakaway pin insertion device (28) interacts with a first tappet unit (21) and the breakaway claw insertion device (29) interacts with a second tappet unit (22),
**characterised in that**
between the base plate (10) and a head plate (2) is disposed a press plate (3), wherein the press plate (3) is movable between the base plate (10) and the head plate (2) and has at least four passages (33, 33.1, 33.2, 34, 34.1, 34.2), wherein at least one of the passages (33, 34) can be closed by means of a pivot module (6) and thereby the first tappet unit (21) and/or the second tappet unit (22) can be activated.

2. Setting unit according to claim 1, **characterised in that** the breakaway pin insertion device (28) has a folding module (14) and a pin supply pipe (13) as well as a pin setting sleeve (17) with pin clamping slots (30).

3. Setting unit according to claim 1 or 2, **characterised in that** the breakaway claw insertion device (29) has a rotation module (19) and a claw setting sleeve (18) having a claw clamping slot (30.1).

4. Setting unit according to claim 3, **characterised in that** the claw setting sleeve (18) is disposed to be movable about 360°, wherein a rotational movement can be carried out by the rotation module (19).

5. Setting unit according to any of the preceding claims, **characterised in that** the first tappet unit (21) has a tappet holder (25) for guiding a first pin tappet (5) and a second pin tappet (5.1), wherein the first pin tappet (5) and the second pin tappet (5.1) both engage in a movable manner through the tappet holder (25) and enclose respectively one surrounding pin tappet spring (44, 44.1), wherein the first pin tappet (5) and the second pin tappet (5.1) are differentiated by a varying pin tappet head (40, 41).

6. Setting unit according to any of the preceding claims, **characterised in that** the second tappet unit (22) has a tappet holder (25.1) for guiding the first claw tappet (11) and the second claw tappet (11.1), wherein the first claw tappet (11) and the second claw tappet (11.1) both engage in a movable manner through the tappet holder (25.1) and include in each case one surrounding claw tappet spring (44.2, 44.3), wherein the first claw tappet (11) and the second claw tappet (11.1) are differentiated by a varying claw tappet head (42, 43).

7. Setting unit according to any of the preceding claims, **characterised in that** the base plate (10), the head plate (2) and the press plate (3) are connected with one another via a first guide shaft (4), a second guide shaft (4.1), a third guide shaft (4.2) and a fourth guide shaft (4.3).

8. Method for operating a setting unit (1) according to claims 2 to 7,
**characterised in that** by the following steps:
- charging the pin setting sleeve (17) and/or the claw setting sleeve (18);
- operating the pivoting module (6) for closing at least one of the passages (33, 34);
- moving the press plate (3) in the direction of the base plate (10);
- driving the pin tappet (5, 5.1) and/or the claw tappet (11, 11.1) into the pin setting sleeve (17) or the claw setting sleeve (18), in a manner suitable to press the breakaway pin (16) and/or the breakaway claw (15) out of the pin setting sleeve (17) or the claw setting sleeve (18).

## Revendications

1. Unité de mise en place pour la fabrication d'un outil d'éjection avec des tiges d'éjection (16) et/ou des griffes d'éjection (15) avec une plaque de base (10), qui comprend un dispositif d'introduction de tige d'éjection (28) et un dispositif d'introduction de griffe d'éjection (29), lequel dispositif d'introduction de tige d'éjection (28) coopère avec une première unité formant poussoir (21) et lequel dispositif d'introduction de griffe d'éjection (29) coopère avec une deuxième unité formant poussoir (22),
**caractérisée en ce qu'**une plaque de poussée (3) est agencée entre la plaque de base (10) et une plaque frontale (2), laquelle plaque de poussée (3) est mobile entre la plaque de base (10) et la plaque frontale (2) et comporte au moins quatre passages (33, 33.1, 33.2, 34, 34.1, 34.2), tels qu'au moins l'un des passages (33, 34) peut être fermé au moyen d'un module pivotant (6) et que la première unité formant poussoir (21) et/ou la deuxième unité formant poussoir (22) peut ce faisant être activée.

2. Unité de mise en place selon la revendication 1, **caractérisée en ce que** le dispositif d'introduction de tige d'éjection (28) comporte un module rabattant (14) et un tube d'amenée de tige (13) ainsi qu'une douille de mise en place de tige (17) avec des fentes de serrage de tige (30).

3. Unité de mise en place selon la revendication 1 ou 2, **caractérisée en ce que** le dispositif d'introduction de griffe d'éjection (29) comporte un module tournant (19) et une douille de mise en place de griffe (18) avec une fente de serrage de griffe (30.1).

4. Unité de mise en place selon la revendication 3, **caractérisée en ce que** la douille de mise en place de griffe (18) est agencée mobile en rotation sur 360°, un mouvement de rotation pouvant être effectué par le module tournant (19).

5. Unité de mise en place selon l'une quelconque des revendications précédentes, **caractérisée en ce que** la première unité formant poussoir (21) comporte un porte-poussoir (25) destiné à guider un premier poussoir de tige (5) et un deuxième poussoir de tige (5.1), lequel premier poussoir de tige (5) et lequel deuxième poussoir de tige (5.1) passent tous deux de manière mobile à travers le porte-poussoir (25) et comprennent chacun un ressort de poussoir de tige (44, 44.1) les entourant respectivement, lequel premier poussoir de tige (5) et lequel deuxième poussoir de tige (5.1) se distinguent par une tête de poussoir de tige (40, 41) qui varie.

6. Unité de mise en place selon l'une quelconque des revendications précédentes, **caractérisée en ce que** la deuxième unité formant poussoir (22) comporte un porte-poussoir (25.1) destiné à guider le premier poussoir de griffe (11) et le deuxième poussoir de griffe (11.1), lequel premier poussoir de griffe (11) et lequel deuxième poussoir de griffe (11.1) passent tous deux de manière mobile à travers le porte-poussoir (25.1) et comprennent chacun un ressort de poussoir de griffe (44.2, 44.3) les entourant respectivement, lequel premier poussoir de griffe (11) et lequel deuxième poussoir de griffe (11.1) se distinguent par une tête de poussoir de griffe (42, 43) qui varie.

7. Unité de mise en place selon l'une quelconque des revendications précédentes, **caractérisée en ce que** la plaque de base (10), la plaque frontale (2) et la plaque de poussée (3) sont reliées entre elles par l'intermédiaire d'un premier arbre de guidage (4), d'un deuxième arbre de guidage (4.1), d'un troisième arbre de guidage (4.2) et d'un quatrième arbre de guidage (4.3).

8. Procédé de fonctionnement d'une unité de mise en place (1) selon les revendications 2 à 7, **caractérisé en ce que** par les étapes suivantes :
- chargement de la douille de mise en place de tige (17) et/ou de la douille de mise en place de griffe (18) ;
- actionnement du module pivotant (6) afin de fermer au moins l'un des passages (33, 34) ;
- déplacement de la plaque de poussée (3) en direction de la plaque de base (10) ;
- introduction du poussoir de tige (5, 5.1) et/ou du poussoir de griffe (11, 11.1) respectivement dans la douille de mise en place de tige (17) et dans la douille de mise en place de griffe (18), de manière appropriée, afin de pousser la tige d'éjection (16) et/ou la griffe d'éjection (15) respectivement hors de la douille de mise en place de tige (17) et de la douille de mise en place de griffe (18).
